# DEMANDE DE BREVET EUROPEEN

(11) **EP 4 685 120 A1**
(43) Date de publication de la demande: **28.01.2026**
(21) Numéro de dépôt: 25190061.9
(22) Date de dépôt: 17.07.2025
(51) Int. Cl.: C03C 1/00, C03B 1/02, C03C 1/02

(54) **COMPOSITE CONFORMÉ PRÉPARÉ À PARTIR DE RECYCLATS DE LAINE MINÉRALE ET D'UN PORTEUR DE POTASSIUM NON-CIMENTAIRE**

(30) Priorité: 22.07.2024 FR 2408046
(71) Demandeur: Saint-Gobain Isover, 92400 Courbevoie (FR); Université de Limoges, 87000 Limoges (FR)
(72) Inventeur: Bost, Nicolas, 23350 Genouillac (FR); Launai, Dorian, 87000 Limoges (FR); Robin, Valentin, 87000 Limoges (FR); Joussein, Emmanuel, 87000 Limoges (FR)
(74) Mandataire: Saint-Gobain Recherche

(57) **Abrégé**

La présente invention concerne un procédé de fabrication d'un composite conformé, comprenant :
i) la préparation d'un mélange comprenant :
- des recyclats de laine minérale,
- un porteur de silice non-cimentaire,
- un porteur de potassium non-cimentaire, et
- de l'eau,
où le rapport massique SiO₂/K₂O dans le mélange est de 0,05 à 25, et
ii) la conformation dudit mélange en un composite conformé.

Elle concerne en outre un composite conformé pouvant être obtenu par un tel procédé, ainsi qu'un procédé de fabrication d'une laine minérale utilisant un tel composite conformé.

## Description

L'invention concerne le domaine de la valorisation de résidus à base de laine minérale, notamment de laine de roche ou de laine de verre. De façon usuelle, les résidus de production de laine minérale sont agglomérés sous forme de composites conformés, désignés fréquemment par le terme de « briquettes » (d'autres dénominations étant disponibles essentiellement selon la géométrie du composite conformé) pour être recyclés dans le procédé de fabrication de laine minérale. Ces composites conformés, notamment sous forme de briquettes, peuvent être introduits dans un four de fusion, qui alimente lui-même un dispositif de fibrage.

Selon un procédé, dit de centrifugation externe, de la laine minérale est obtenue à partir d'une masse minérale en fusion déversée sur un ensemble de rotors en rotation, la masse fondue étant éjectée de la périphérie des rotors et prise en charge par un courant gazeux d'étirage et se transformant ainsi en fibres. La laine est ensuite imprégnée par une composition d'encollage. La composition d'encollage est pulvérisée sur les fibres pendant leur formation puis la masse de fibres encollées est collectée sur un organe récepteur et convoyée dans un dispositif de mise en forme de bande de feutre de laine minérale. L'encollage est destiné à donner sa cohésion à la laine en formant après cuisson et réticulation des ponts entre les fibres. Ce procédé produit une quantité non négligeable de résidus, d'une part au moment du fibrage, où des résidus comprenant de la matière minérale solidifiée et de l'encollage, ladite matière minérale solidifiée comprenant généralement des fibres et des grains (« shot » en anglais) ; et d'autre part après formation du feutre par suite de découpes destinées à rectifier les bords du feutre ou à mettre les produits à dimension. Enfin, il arrive que la production ne fournisse pas la qualité attendue et certains lots partent au rebut.

Selon un autre procédé, dit à centrifugation interne, la matière fondue est cette fois fibrée au travers d'un organe de fibrage en forme d'assiette percée à sa périphérie, la matière étant éjectée au travers de la paroi percée de l'assiette sous forme de filaments qui sont étirés par un courant gazeux d'étirage. Cette technique produit un rendement de fibrage très supérieur à la technique de centrifugation externe et ne produit pas de grains. Cependant les déchets de coupe sont inévitables.

Ces résidus à base minérale sont valorisables dans le circuit de fabrication de laine minérale, notamment par refusion avec les matières premières alimentant le four de fusion. Ce recyclage passe généralement par la préparation de composites contenant ces résidus, lesdits composites étant réalisés par conformation, notamment un moulage, d'un mélange de résidus de laine minérale avec un liant minéral, suivie d'un traitement assurant la prise du liant. La mise en forme de briquettes permet de convoyer facilement ces résidus et facilite leur processus de réutilisation, notamment leur réintroduction dans un four de fusion.

Dans le cas d'une laine de roche, ce four peut notamment être du type cubilot, dans lequel la charge de matière première solide faite de blocs de roches naturelles forme avec des blocs de combustible solide (coke) en couches alternées une colonne autoportante au travers de laquelle s'échappent les gaz de combustion. A mesure que la fusion s'opère dans la partie basse de la colonne, cette dernière est rechargée par le haut avec du combustible et de la roche. Ces fours n'admettent pas l'introduction de matières premières en poudre ou particules légères qui ne présentent pas l'aptitude requise à former une couche de matière solide stable dans la colonne verticale. La transformation en composite conformé comme en briquette confère cette aptitude. On cherche à ce que la briquette développe une bonne résistance mécanique assez rapidement après sa mise en forme et à ce qu'elle ne se désagrège pas lors de sa manipulation et son transport.

Pour obtenir une bonne résistance mécanique, il est connu de combiner les recyclats de laine minérale avec des liants à base de ciments, ayant eux-mêmes des teneurs élevées en clinker. De telles briquettes ne sont pas satisfaisantes d'un point de vue environnemental. L'utilisation du clinker contribue en effet significativement à l'émission de gaz à effet de serre, notamment CO₂ et SOₓ. Des formulations alternatives ont été développées avec des matières non-cimentaires, en particulier une combinaison d'un porteur de silice non-cimentaire et d'un porteur de sodium non-cimentaire. De telles formulations ne permettent toutefois pas d'incorporer des teneurs élevées en recyclats de laine minérale.

### RESUME DE L'INVENTION

Les inventeurs ont maintenant découvert que l'utilisation d'un porteur de potassium non-cimentaire, selon un rapport particulier entre la teneur en silicium et la teneur en potassium dans le composite conformé, permettait d'améliorer sa résistance mécanique. Cette amélioration permet avantageusement d'augmenter la teneur en laine minérale dans le composite conformé.

Ainsi, la présente invention concerne un procédé de fabrication d'un composite conformé, comprenant :
i) la préparation d'un mélange comprenant :
   - des recyclats de laine minérale,
   - un porteur de silice non-cimentaire,
   - un porteur de potassium non-cimentaire, et
   - de l'eau,
   où le rapport massique SiO₂/K₂O dans le mélange est de 0,05 à 25, de préférence de 0,1 à 25, et
ii) la conformation dudit mélange en un composite conformé.

De préférence, la présente invention concerne un procédé de fabrication d'un composite conformé qui est avantageusement adapté pour être fondu et fibré pour l'obtention d'une laine minérale, ledit procédé comprenant :
i) la préparation d'un mélange comprenant :
   - des recyclats de laine minérale,
   - un porteur de silice non-cimentaire,
   - un porteur de potassium non-cimentaire, qui est distinct de ladite laine minérale, et
   - de l'eau,
   où le rapport massique SiO₂/K₂O dans le mélange est de 0,1 à 25, et
ii) la conformation dudit mélange en un composite conformé.

Dans certains modes de réalisation, la teneur pondérale en recyclats de laine minérale est :
- d'au moins 10%, par exemple d'au moins 30%, et
- de préférence au plus 90%, par rapport au poids total sec du mélange.

Dans certains modes de réalisation, la teneur pondérale en recyclats de laine minérale est supérieure à 60% et de préférence au plus 90%, par rapport au poids total sec du mélange.

Dans certains modes de réalisation, le rapport massique SiO₂/K₂O dans le mélange est de 0,1 à 17, de préférence de 0,4 à 15, mieux encore de 0,6 à 12, voire de 0,8 à 10, ou même de 0,8 à 4.

Dans certains modes de réalisation, la teneur pondérale en porteur de silice non-cimentaire est de 4 à 61%, de préférence de 5 à 50%, voire de 5 à 22%, par rapport au poids total sec du mélange.

Dans certains modes de réalisation, ledit porteur de silice non-cimentaire est choisi parmi un silicate alcalin, argile calcinée ou naturelle, kaolinite, illite, montmorillonite, kaolin traité thermiquement, fumée de silice, cendres volantes de classe C ou F, cendres de biomasse, laitier de haut-fourneau, laitier d'aciérie, cendre de cosse de riz, balle de riz, pouzzolane, cendre volcanique, diatomite, et un mélange d'au moins deux de ceux-ci.

Dans certains modes de réalisation, la teneur pondérale en porteur de potassium non-cimentaire est de 1 à 30%, de préférence de 2 à 22%, voire de 2 à 12%, par rapport au poids total sec du mélange.

Dans certains modes de réalisation, le porteur de potassium non-cimentaire est choisi parmi le carbonate de potassium, l'hydroxyde de potassium, l'hydrogénocarbonate de potassium, le sulfate de potassium, et un mélange d'au moins deux de ceux-ci.

Dans certains modes de réalisation, le mélange comprend en outre un porteur d'alcalino-terreux non-cimentaire. Dans un tel mode, la teneur pondérale en porteur d'alcalino-terreux non-cimentaire est avantageusement de 0 à 22%, de préférence de 1 à 15%, voire de 1 à 7%, par rapport au poids total sec du mélange.

Dans certains modes de réalisation, le porteur d'alcalino-terreux non-cimentaire est choisi parmi un calcaire, la craie (CaCO₃), la chaux vive CaO, la chaux éteinte Ca(OH)₂, la chaux magnésienne, la dolomie CaMg(CO₃)₂, l'aragonite, la vatérite ou autres polymorphes de CaCO₃, ou un mélange d'au moins deux de ceux-ci.

Dans certains modes de réalisation, la teneur pondérale totale en K₂O et Na₂O dans le mélange est inférieure à 15%, de préférence inférieure à 8%, par rapport au poids total sec du mélange.

Dans certains modes de réalisation, les recyclats de laine minérale sont des recyclats de laine minérale comprenant un encollage à base de résine phénolique.

Un autre objet de la présente invention est un composite conformé pouvant être obtenu par le procédé tel que défini dans la présente demande.

Un autre objet de la présente invention est un procédé de fabrication d'une laine minérale, comprenant :
- une étape a) d'alimentation d'une enceinte de fusion, tel qu'un four cubilot, avec un composite conformé tel que défini dans la présente demande, en tant que charge vitrifiable, et
- une étape b) de fusion dudit composite conformé dans ladite enceinte de fusion, pour obtenir un bain de matière fondue, et
- une étape c) de fibrage dudit bain de matière fondue.

### DESCRIPTION DETAILLEE

Dans la présente demande, sauf mention contraire, les teneurs pondérales des composants (recyclats de laine minérale, porteurs non-cimentaires, etc.) dans le mélange de l'étape i) sont des teneurs en poids secs exprimées par rapport au poids total sec du mélange.

L'étape i) du procédé selon l'invention comprend la préparation d'un mélange comprenant :
- des recyclats de laine minérale,
- un porteur de silice non-cimentaire,
- un porteur de potassium non-cimentaire, et
- de l'eau,
où le rapport massique SiO₂/K₂O dans le mélange est de 0,05 à 25.

Dans la présente demande, l'expression « recyclats de laine minérale » désigne tous résidus issus de la production de laine minérale, y compris les matières minérales solidifiées sous forme de grains ou infibrés, ou récupérées sous forme d'envols solides, ou des paquets de fibres récupérés (par lavages) sur les différentes surfaces réceptrices ou convoyeuses, ainsi que du feutre de laine minérale découpé. Les recyclats de laine minérale englobent également les déchets de laine minérale issus des chantiers de construction ou déconstruction.

Les recyclats de laine minérale peuvent éventuellement être sous une forme de fibres légèrement broyées (mais conservant un caractère fibreux). Les recyclats de laine minérale sont typiquement sous forme de fibres de longueur supérieure à 5 mm.

Les recyclats de laine minérale peuvent en particulier être des recyclats de laine de roche, de laine de verre (incluant notamment, laine de verre basse alumine et haute alumine), ou un mélange de ceux-ci. Les recyclats de laine minérale peuvent également être des recyclats de laine de laitier.

Une laine minérale présente généralement une composition chimique comprenant les constituants suivants :
SiO₂ : 30 à 75% en masse, CaO+MgO : 5 à 45% en masse, Al₂O₃ : 0 à 30% en masse, Na₂O+K₂O : 0 à 20% en masse, Fe₂O₃ : 0 à 20% en masse, B₂O₃ : 0 à 14% en masse, MnO : 0 à 4% en masse.

L'appellation laine de roche fait généralement référence à des laines minérales présentant des fibres dont la composition chimique comprend les constituants suivants :
SiO₂ : 30 à 50% en masse, Al₂O₃ : 10 à 22% en masse, CaO+MgO : 20 à 45% en masse, Fe₂O₃ : 0 à 20% en masse, Na₂O+K₂O : 0 à 8% en masse, B₂O₃ : 0 à 1% en masse.

Par contraste, l'appellation laine de verre fait généralement référence à des laines minérales présentant des fibres dont la composition chimique comprend les constituants suivants :
- Pour les laines de verre dites basse alumine :
   SiO₂ : 50 à 75% en masse, Al₂O₃ : 0 à 8% en masse, CaO+MgO : 5 à 20% en masse, Fe₂O₃ : 0 à 3% en masse, Na₂O+K₂O : 6 à 20% en masse, B₂O₃ : 0 à 14% en masse, MnO : 0 à 4% en masse.
- Pour les laines de verre dites haute alumine :
   SiO₂ : 35 à 55% en masse, Al₂O₃ : 16 à 27% en masse, CaO+MgO : 3 à 30% en masse, Fe₂O₃ : 0 à 15% en masse, Na₂O+K₂O : 9 à 17% en masse, B₂O₃ : 0 à 5% en masse.

Les compositions de laine minérale sont ici exprimées sous forme d'oxyde par convention. En particulier, si l'on exprime la teneur (totale) en oxyde de fer sous la forme Fe₂O₃, cela ne signifie pas que cet oxyde de fer est nécessairement et exclusivement présent sous la forme ferrique. L'oxyde de fer peut être présent à la fois sous ses formes ferrique (Fe₂O₃) et ferreuse (FeO), et c'est par pure convention que l'on désigne par Fe₂O₃ la teneur totale en oxyde de fer. De préférence, la somme des teneurs massiques en SiO₂, Al₂O₃, CaO, MgO, Fe₂O₃, Na₂O, K₂O, B₂O₃ et MnO dans les compositions de laine minérale décrites ci-dessus est supérieure ou égale à 90%, voire supérieure ou égale à 95%.

Lorsque la laine minérale est une laine de verre, celle-ci présente avantageusement un micronaire compris entre 9 et 26 L/min. De préférence, ledit micronaire est compris entre 12 et 24 L/min, voire entre 14 et 20 L/min. Le micronaire est représentatif de la finesse des fibres de la laine de verre. La mesure du micronaire rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit "appareil micronaire ".

Lorsque la laine minérale est une laine de roche, celle-ci présente avantageusement un fasonaire d'au moins 100, voire d'au moins 200, par exemple compris entre 200 et 300. De préférence, ledit fasonaire est compris entre 200 et 290, voire entre 200 et 280, ou encore entre 200 et 270. Le fasonaire est représentatif de la finesse des fibres de roche. La mesure du fasonaire est une détermination de l'indice de finesse des fibres par une méthode similaire à celle du micronaire selon les normes ASTM-D-1448 ou DIN 53941. Le fasonaire est égal à la perte de charge ou différence de débit d'un courant gazeux traversant une éprouvette constituée d'une touffe de fibres minérales de masse donnée (égale à 5 g pour les mesures selon l'invention). La touffe de fibres, exemptes de liant ou de tout autre composant non fibreux, est comprimée dans une chambre cylindrique de volume prédéterminé. Le débit de gaz étant maintenu constant, on mesure à l'aide d'une colonne d'eau graduée en unités conventionnelles appelées fasonaires, la perte de charge à travers l'éprouvette. Le fasonaire est ainsi exprimé en millimètres de colonne d'eau pour 5 g (masse de l'éprouvette).

Les recyclats de laine minérale peuvent être des recyclats de laine minérale vierge, de laine minérale encollée ou d'un mélange de celles-ci.

Au sens de l'invention, l'expression « laine minérale encollée » désigne ici de la laine minérale constituée de fibres minérales portant à leur surface un encollage (i.e. liant organique) thermodurci ou non-thermodurci. Le terme « thermodurci » qualifie un encollage sous une forme insoluble et infusible, obtenu typiquement par chauffage de l'encollage.

Au sens de l'invention, l'expression « laine minérale vierge » désigne la laine minérale, obtenue après fibrage et dont les fibres ne sont pas liées les unes aux autres au moyen d'un encollage, par opposition à une laine minérale encollée.

Lorsqu'il s'agit de recyclats de laine minérale comprenant un encollage, l'encollage est typiquement présent dans les recyclats de laine minérale à raison de 0,1 à 10% en poids, et plus particulièrement à raison de 0,5 à 7% en poids de matière sèche d'encollage par rapport au poids total de recyclats de laine minérale secs. La concentration en extraits secs dans l'encollage est en général de 5 à 40% en poids, de préférence de 10 à 20% en poids. Dans certains modes de réalisation, l'encollage est thermodurci. Dans certains modes de réalisation, l'encollage est non-thermodurci.

En particulier, les recyclats de laine minérale peuvent être des recyclats de laine minérale comprenant un encollage à base de résine phénolique.

Les encollages à base de résines phénoliques sont bien connus de l'homme du métier. La résine phénolique (également appelée « résol ») est une résine thermodurcissable obtenue typiquement par condensation de phénol et de formaldéhyde. D'autres constituants peuvent être ajoutés au phénol et au formaldéhyde, notamment pour ajuster les propriétés de la résine. Ces constituants peuvent par exemple être de la glycine, de l'urée, une amine, ou un aminoalcool. Alternativement, les constituants précités peuvent être ajoutés à la composition d'encollage comprenant la résine phénolique (c'est-à-dire, après formation de ladite résine phénolique).

La résine phénolique peut également être formée en présence d'un homopolymère ou copolymère thermoplastique réticulable (e.g. les résines acryliques, les poly(acétates de vinyle), les polyuréthanes ainsi que leurs homo- et copolymères, en particulier les copolymères à base d'esters de l'acide acrylique utilisant également des acrylonitriles).

Généralement, l'encollage comprend en outre d'autres composants que la résine phénolique. Il peut notamment comprendre un catalyseur (e.g. sulfate ou sulfamate d'ammonium), un agent de couplage (e.g. un silane, plus particulièrement un aminosilane), un agent hydrofugeant (e.g. un silicone), un agent anti-poussières (e.g. une huile), un agent hydrophobe, un retardateur de polycondensation (e.g. l'ammoniaque), un stabilisant (e.g. nanogels d'oxyde métallique, des particules de verre), un agent ignifugeant (e.g. phosphates ou polyphosphates d'ammonium), des argiles (en particulier les kaolinites, les montmorillonites, le kaolin et/ou la bentonite), un agent thixotrope (e.g. des polysaccharides tels que l'amidon, la fécule de pomme de terre, les dérivés de polysaccharide tels que la méthylcellulose), ou des disperseurs de pigments.

A titre d'illustration de documents décrivant des compositions d'encollage à base de résine phénolique, on peut citer les documents suivants, incorporés par référence : EP2609129, EP2091986, EP1289901, et EP1551892.

L'encollage à base de résine phénolique comprend généralement la résine phénolique à raison de 50 à 90% en poids, de préférence de 70 à 90% en poids, de la matière sèche de l'encollage (% de résine phénolique sèche sur le poids total d'encollage sec).

En variante, les recyclats de laine minérale peuvent être des recyclats de laine minérale comprenant un encollage à base de sucre.

L'expression « sucre » utilisée dans le contexte de la présente invention désigne une ou plusieurs molécules choisies parmi les monosaccharides, oligosaccharides ou polysaccharides, Le sucre est au moins un saccharide choisi parmi les saccharides réducteurs, non réducteurs et hydrogénés. L'expression « saccharide réducteur » doit être entendue au sens conventionnel, à savoir un monosaccharide ou un polysaccharide porteur d'un groupe OH hémiacétalique libre, ce groupe ayant notamment une action réductrice sur les solutions cupro-alcalines. A titre d'exemples de monosaccharides réducteurs, on peut citer les saccharides réducteurs renfermant 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que glucose, le mannose et le galactose.

L'expression « saccharide non réducteur » doit être entendue au sens conventionnel, à savoir qu'elle désigne un saccharide constitué de plusieurs motifs saccharidiques dont le carbone 1 porteur du groupe OH hémiacétalique est engagé dans une liaison. Un saccharide réducteur au sens de l'invention ne présente aucune action réductrice sur les solutions cupro-alcalines. A titre d'exemples de tels saccharides non réducteurs, on peut citer les diholosides tels que le tréhalose, les isotréhaloses, le saccharose, et les isosaccharoses (« isosucroses » en anglais); les triholosides tels que le mélézitose, le gentianose, le raffinose, l'erlose et l'umbelliférose; les tétraholosides tels que le stachyose; et les pentaholosides tels que le verbascose.

Par « saccharide hydrogéné », on entend l'ensemble des produits résultant de la réduction, de quelque manière que ce soit, d'un saccharide choisi parmi les monosaccharides, les oligosaccharides, les polysaccharides linéaires, ramifiés ou cycliques, et les mélanges de ces produits, notamment les hydrolysats d'amidon. A titre d'exemples de saccharides hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

L'encollage comprenant le sucre peut comprendre d'autres composés tels qu'un agent réticulant, qui peut être choisi parmi des acides organiques polyfonctionnels monomères ou polymères, notamment de l'acide citrique, des amines primaires ou secondaires, de l'ammoniaque, des sels métalliques ou ammonium d'acides organiques ou inorganiques, notamment du sulfate d'ammonium ou d'alcalins ou de métaux. Il peut aussi comprendre un composé réactif à insaturation éthylénique, qui peut notamment être le produit de réaction de l'anhydride maléique et de tétraéthylpentamine, particulièrement réactif avec les sucres non réducteurs. Il peut aussi contenir des additifs tels qu'un silane comme un silane à groupe terminal polaire par exemple aminosilane en tant qu'agent de couplage, un silicone en tant qu' agent hydrofugeant. A titre d'illustration de documents décrivant des compositions d'encollage à base de sucre, on peut citer les documents US2010/0282996, US2012/0263934, WO2012/168619, WO2012/168621, incorporés par référence.

La composition d'encollage à base de sucre comprend généralement celui-ci à raison de 30 à 90% en poids de la matière sèche de l'encollage (% de sucre sec sur le poids total d'encollage sec).

Dans un mode particulier, les recyclats de laine minérale ne comprennent pas de recyclats de laine minérale comprenant un encollage à base de sucre.

La teneur pondérale en recyclats de laine minérale est en général d'au moins 10%, plus particulièrement d'au moins 30%, voire d'au moins 40%, par rapport au poids total sec du mélange (pourcentages de recyclats de laine minérale secs).

La teneur pondérale en recyclats de laine minérale est en général d'au plus 95% en poids, de préférence d'au plus 90% en poids, par rapport au poids total sec du mélange (pourcentages de recyclats de laine minérale secs).

Dans un mode préféré, la teneur pondérale en recyclats de laine minérale est supérieure à 60% (par exemple, supérieure ou égale à 65%, voire supérieure ou égale à 70%), et avantageusement d'au plus 90%, par rapport au poids total sec du mélange.

Le mélange préparé à l'étape i) comprend plusieurs matières dites « non-cimentaires ».

L'expression « non-cimentaire » indique que le composé auquel elle est attachée n'est pas un ciment. Un ciment est notamment un ciment tel que défini par la norme NF EN 197-1 et par la norme NF EN 197-5 . Un ciment est en particulier :
- une matière anhydre en poudre comprenant du silicate de calcium cristallisé ou de l'aluminate de calcium cristallisé,
- un composé minéral hydraulique conduisant à la formation, en présence d'eau, de silicate de calcium hydraté ou d'aluminate de calcium hydraté, et
- essentiellement cristallisé et contient moins de 10% en poids d'amorphe.

En outre, un ciment comprend du clinker, qui est issu d'un procédé de clinkérisation.

Dans un ciment, le silicate de calcium ou l'aluminate de calcium sont des phases cristallisées. Des exemples de ciments sont notamment le ciment Portland, le ciment blanc, le ciment alumineux, le ciment sulfo-alumineux, et le ciment prompt.

Un laitier et un silicate d'alcalin ne sont pas considérés par la personne du métier comme étant des ciments.

Le mélange préparé à l'étape i) comprend un porteur de silice non-cimentaire (distinct de la laine minérale).

Un porteur de silice non-cimentaire vise une matière ayant des propriétés hydrauliques, qui forme des ions silicates en présence d'eau. Le porteur de silice non-cimentaire peut éventuellement présenter un caractère cristallin s'il se dissout aisément dans l'eau. C'est le cas notamment d'un silicate de sodium, lequel peut notamment être introduit dans le mélange sous forme de solution aqueuse. Par contre, si l'on utilise un laitier comme porteur de silice non-cimentaire, il convient de préférence que celui-ci soit amorphe à plus de 80% en poids et de manière encore préférée à plus de 90% en poids, qu'il comprenne au moins 10% en poids de silice, et qu'il présente une granulométrie fine, notamment telle que son D50 soit inférieur ou égal à 250 µm, de préférence inférieur ou égal à 200 µm, voire inférieur ou égal à 100µm et de manière encore plus préférée inférieur ou égal à 50µm. De tels laitiers peuvent être obtenus comme sous-produits de l'industrie sidérurgique. Ils tiennent leur structure vitreuse, c'est-à-dire leur caractère essentiellement amorphe, des traitements de trempe à l'eau qui leur sont appliqués après collecte, ce qui leur confère des propriétés hydrauliques latentes. Lorsqu'il est sec, le porteur de silice non-cimentaire est de préférence un composé solide minéral totalement ou partiellement amorphe. Il est amorphe de préférence à plus de 80% en poids et de manière encore préférée à plus de 90% en poids. Il comprend de préférence au moins 10% en poids de silice (SiO₂) et de manière encore préférée au moins 20% en poids de silice. Il comprend éventuellement de l'alumine et l'oxyde de calcium. Il peut contenir, en moindre quantité, de l'oxyde de fer, de l'oxyde de métal alcalin, un phosphate, un sulfate, un sulfure, de l'oxyde de titane. Il présente généralement un ratio SiO₂/CaO (en poids) < 1,5 et la somme de sa teneur en CaO et en SiO₂ représente généralement plus de 45% de son poids. Il est de préférence suffisamment fin pour se dissoudre au moins partiellement dans un milieu aqueux. Ainsi, la granulométrie du porteur de silice non-cimentaire est de préférence telle que le D50 soit inférieur ou égal à 250 µm, de préférence inférieur ou égal à 200 µm, voire inférieur ou égal à 100µm et de manière encore plus préférée inférieur ou égal à 50µm. En application verrière, ce porteur de silice est source de SiO₂ dans le verre final.

Le D50 indique la valeur pour laquelle 50% des particules ont une taille inférieure ou égale à cette valeur, et 50% des particules ont une taille supérieure à cette valeur. Le D50 peut être déterminé par diffraction laser, ou par tamisage. Lorsque le D50 est déterminé par diffraction laser, le % de particules renvoie à un % en nombre. Lorsque le D50 est déterminé par tamisage, le % de particules renvoie à un % en masse.

Le porteur de silice non-cimentaire est avantageusement choisi parmi : un silicate alcalin, une argile calcinée ou naturelle, kaolinite, illite, montmorillonite, kaolin traité thermiquement (e.g. kaolin calciné et/ou déshydraté, tel que le métakaolin (e.g. métakaolin principalement amorphe pouvant contenir des cristaux de kaolinite)), fumée de silice, cendres volantes (e.g. de classe C ou classe F), cendres de biomasse, laitier (e.g. laitier de haut-fourneau, laitier d'aciérie), cendre de cosse de riz, balle de riz, pouzzolane (e.g. pouzzolane naturelle ou synthétique calcinée), cendre volcanique (e.g. naturelle ou calcinée), diatomite, ou un mélange d'au moins deux de ceux-ci.

De préférence, le porteur de silice non-cimentaire est choisi parmi un laitier (e.g. laitier de haut-fourneau), un kaolin traité thermiquement (e.g. kaolin calciné et/ou déshydraté, tel que le métakaolin), des cendres volcaniques, et un mélange de ceux-ci. Mieux encore, le porteur de silice non-cimentaire est un laitier (e.g. laitier de haut-fourneau).

La teneur pondérale en porteur de silice non-cimentaire est avantageusement de 4 à 61%, de préférence de 5 à 50%, voire de 5 à 22%, par rapport au poids total sec du mélange.

Le mélange préparé à l'étape i) comprend un porteur de potassium non-cimentaire. Le porteur de potassium non-cimentaire est distinct de la laine minérale, et typiquement distinct du porteur de silice non-cimentaire.

Le porteur de potassium non-cimentaire contient du potassium et forme des ions potassium en présence d'eau. Il comprend de préférence au moins 10% en poids de potassium (il s'agit du % en l'élément potassium, et non pas du pourcentage en son oxyde) et de préférence au moins 20% en poids de potassium. Le porteur de potassium non-cimentaire a une granulométrie avantageusement telle que le D50 est inférieur ou égal à 250 µm, de préférence inférieur ou égal à 200 µm, voire inférieur ou égal à 100 µm et de manière encore plus préférée inférieur ou égal à 50 µm. En application verrière, ce porteur de potassium est source d'oxyde de potassium dans le verre final.

De préférence, le porteur de potassium non-cimentaire ne comprend pas d'autres métaux (e.g. alcalin, alcalino-terreux, métaux de transition...) ou métalloïdes (e.g. silicium) que le potassium.

Le porteur de potassium non-cimentaire peut être choisi parmi le carbonate de potassium, l'hydroxyde de potassium, l'hydrogénocarbonate de potassium, le sulfate de potassium, et un mélange d'au moins deux de ceux-ci.

De préférence, le porteur de potassium non-cimentaire est le carbonate de potassium, l'hydroxyde de potassium, ou un mélange de ceux-ci.

Mieux encore, le porteur de potassium non-cimentaire est l'hydroxyde de potassium, éventuellement en mélange avec le carbonate de potassium.

La teneur pondérale en porteur de potassium non-cimentaire est avantageusement de 1 à 30%, de préférence de 2 à 22%, voire de 2 à 12%, par rapport au poids total sec du mélange.

Le mélange préparé à l'étape i) peut comprendre en outre un porteur d'alcalino-terreux non-cimentaire, qui est de préférence un porteur de calcium non-cimentaire. Le porteur d'alcalino-terreux non-cimentaire est distinct du porteur de silice non-cimentaire, du porteur de potassium non-cimentaire, et de la laine minérale.

Le porteur d'alcalino-terreux non-cimentaire contient un alcalino-terreux et forme des ions alcalino-terreux en présence d'eau. Il comprend de préférence au moins 10% en poids d'alcalino-terreux (il s'agit du % en l'élément alcalino-terreux comme Ca ou Mg, et non pas du pourcentage en son oxyde) et de préférence au moins 20% en poids d'alcalino-terreux.

De préférence, le porteur d'alcalino-terreux non-cimentaire ne comprend pas d'autre métaux (e.g. alcalin, métaux de transition...) ou métalloïdes (e.g. silicium) que l'alcalino-terreux.

Le porteur d'alcalino-terreux non-cimentaire est avantageusement choisi parmi un calcaire, la craie (CaCO₃), la chaux vive CaO, la chaux éteinte Ca(OH)₂, la chaux magnésienne, la dolomie CaMg(CO₃)₂, l'aragonite, la vatérite ou autres polymorphes de CaCO₃, ou un mélange d'au moins deux de ceux-ci. Dans certains modes de réalisation, le porteur d'alcalino-terreux non-cimentaire est choisi parmi un calcaire, la chaux vive CaO, la chaux éteinte Ca(OH)₂, la chaux magnésienne, la dolomie CaMg(CO₃)₂, l'aragonite, la vatérite ou autres polymorphes de CaCO₃, ou un mélange d'au moins deux de ceux-ci.

Le porteur d'alcalino-terreux non-cimentaire a une granulométrie avantageusement telle que le D50 est inférieur ou égal à 250 µm, de préférence inférieur ou égal à 200 µm, voire inférieur ou égal à 100 µm et de manière encore plus préférée inférieur ou égal à 50 µm.

La teneur pondérale en porteur d'alcalino-terreux non-cimentaire est avantageusement de 0 à 22%, de préférence de 1 à 15%, voire de 1 à 7%, par rapport au poids total sec du mélange.

Lorsque le porteur d'alcalino-terreux non-cimentaire est présent, le rapport massique de la quantité sèche de porteur de potassium non-cimentaire à la quantité sèche de porteur d'alcalino-terreux non-cimentaire est avantageusement de 0,3 à 9, de préférence de 0,3 à 5, voire de 0,3 à 4.

Dans un mode particulier, le porteur de potassium non-cimentaire est un mélange de KOH et K₂CO₃, et le porteur d'alcalino-terreux non-cimentaire est Ca(OH)₂. Dans un tel mode, le rapport massique de la quantité totale sèche de KOH et K₂CO₃ à la quantité sèche de Ca(OH)₂ est avantageusement de 0,6 à 9, de préférence de 1 à 9, voire de 1,2 à 6, par exemple de 2 à 4.

Le mélange préparé à l'étape i) peut comprendre en outre des additifs (ou de manière équivalente « éléments d'addition »). Ces additifs sont bien connus de la personne du métier. Ils sont classiquement choisis parmi le gypse et les adjuvants organiques (e.g. plastifiants, entraîneurs d'air, rétenteurs d'eau). Ces additifs représentent en général moins de 5% (voire même moins de 2%) en poids du mélange (i.e. par rapport au poids total sec du mélange).

Le mélange préparé à l'étape i) peut comprendre en outre des charges minérales. Ces charges minérales peuvent être choisies parmi des matières minérales inertes, c'est-à-dire qui ne sont pas réactives vis-à-vis de la composante liant du composite. Les charges minérales peuvent être des granulats, qui sont généralement utiles à la stabilité mécanique du composite conformé et/ou utiles pour la charge vitrifiable dans une perspective de valorisation en fusion verrière notamment pour sa teneur en fer. Les granulats présentent généralement un D50 supérieur à 200 µm, notamment supérieur à 250 µm, voire supérieur à 500 µm, ou même supérieur à 1 mm.

Dans un mode particulier, les charges minérales sont choisies parmi un gravier, un laitier inerte (ou de manière équivalente « laitier non réactif »), et un mélange de ceux-ci. La charge minérale peut également être de la bauxite.

Plus particulièrement, il peut s'agir de granulats provenant de filières industrielles de recyclage valorisant des sous-produits (ou coproduits) industriels ou issus de la démolition de bâtiments ou de voiries (broyats de bétons, briques, recyclage de ballasts de chemin de fer, de croûtes ou de fraisats de revêtements routiers ou de terrils miniers). Le laitier inerte en tant que charge minérale est grossier et n'est pas considéré comme étant porteur de silice non-cimentaire au sens ci-dessus donné, car ne formant pas particulièrement d'ions silicates en présence d'eau et étant par ailleurs cristallin à plus de 20% de son poids et étant de forte granulométrie avec un diamètre médian D50 généralement supérieur à 100 µm, par exemple supérieur à 200 µm, notamment supérieur à 250 µm, voire supérieur à 500 µm, ou même supérieur à 1 mm. Il en est de même pour le gravier. Il peut s'agir notamment de laitiers LD issus de convertisseurs, que l'on fait solidifier sans traitement de trempe après leur prélèvement, ce par quoi ils cristallisent. Cette charge minérale, inerte dans la mesure où elle ne participe pas à la chimie de la solidification du composite conformé, est néanmoins source de matière première de la fibre minérale qui sera fabriquée lorsque les composites conformés seront réutilisés pour la fusion.

De préférence, les charges minérales sont des granulats présentant un D50 supérieur à 200 µm, voire supérieur à 250 µm, ou même supérieur à 500 µm, par exemple supérieur à 1 mm.

La teneur pondérale en charges minérales peut être de 0 à 50%, par exemple de 2 à 40%, ou de 5 à 50%, par rapport au poids total sec du mélange.

Typiquement, les recyclats de laine minérale, le porteur de silice non-cimentaire et le porteur de potassium non-cimentaire, et lorsqu'il est présent le porteur d'alcalino-terreux non-cimentaire, représentent ensemble au moins 90%, en particulier au moins 95%, voire au moins 98%, ou même au moins 99% du poids total sec du mélange.

De préférence, le mélange de l'étape i) ne comprend pas de ciment. Dans certains modes de réalisation, le mélange peut comprendre du ciment, à raison de moins de 8% en poids et de préférence moins de 4% en poids et de manière encore préférée moins de 2% en poids (i.e. par rapport au poids total sec du mélange). De préférence, le rapport massique de la quantité sèche de ciment à la quantité sèche de porteur de silice non-cimentaire, lequel comprend de préférence au moins 10% en poids de silice, est inférieur à 1 et de manière encore préférée inférieure à 0,5.

Le rapport massique SiO₂/K₂O dans le mélange de l'étape i) est de 0,05 à 25. Il s'agit du rapport de la quantité totale massique de silicium, exprimé sous forme d'oxyde (SiO₂), à la quantité totale massique de potassium, exprimé sous forme d'oxyde (K₂O), dans le mélange de l'étape i). Il est bien entendu que l'eau n'est pas prise en compte dans ce rapport (il s'agit d'un rapport massique sur une base de matières sèches).

Plus particulièrement, ce rapport massique SiO₂/K₂O peut être de 0,1 à 25, notamment de 0,1 à 17, plus particulièrement de 0,2 à 17, de préférence de 0,4 à 15, mieux encore de 0,6 à 12, voire de 0,8 à 10, ou même de 0,8 à 4 (par exemple de 1,0 à 4).

La teneur pondérale totale en K₂O et Na₂O (i.e. teneur pondérale en potassium et sodium, exprimés sous forme d'oxyde) dans le mélange est avantageusement inférieure à 15%, de préférence inférieure à 8%, par rapport au poids total sec du mélange.

Le rapport massique SiO₂/(K₂O+Na₂O) dans le mélange de l'étape i) est avantageusement de 0,05 à 15, de préférence de 0,1 à 12, mieux encore de 0,5 à 10, voire de 1 à 3. Il s'agit du rapport de la quantité totale massique de silicium, exprimé sous forme d'oxyde (SiO2), à la quantité totale massique de potassium et sodium, exprimé sous forme d'oxyde (K2O et Na2O), dans le mélange de l'étape i).

Le mélange pour la préparation de la masse à mouler peut être réalisé dans tout malaxeur adapté. Lorsque le porteur de potassium non-cimentaire est KOH, il est préférable de l'apporter au mélange sous forme d'une solution aqueuse de KOH. Il est généralement inutile de chauffer le mélange par apport de calories de l'extérieur au mélange. La température du mélange peut monter en raison de la solubilisation de certains ingrédients. De l'eau est introduite en suffisante quantité pour que le liant hydraulique se répartisse dans toute la masse à mouler mais insuffisamment de façon à ce que le composite conformé conserve sa forme au démoulage, le cas échéant après compaction.

L'eau peut provenir de l'humidité des résidus prélevés dans l'installation de fibrage qui met en œuvre de grandes quantités d'eau, notamment pour rassembler les résidus. De l'eau peut aussi être introduite dans le mélange pour atteindre à la fois une bonne qualité de mélange et une bonne aptitude au moulage, voire à la compaction.

Généralement, l'eau est présente dans le mélange à raison de 2 à 75% en poids (de préférence, de 15 à 72% en poids, voire de 15 à 50% en poids), par rapport au poids sec du mélange.

Le pH du mélange est en général basique, typiquement au moins égal à 8 voire au moins égal à 10, ou même au moins égal à 11.

Lorsque les recyclats de laine minérale comprennent des recyclats de laine minérale encollée, ces derniers comprennent l'encollage avant même d'être introduits dans le mélange et de venir au contact des autres ingrédients du mélange (à part le cas échéant un peu d'eau déjà présente sur les recyclats de laine minérale). L'introduction dans le mélange de la laine minérale et de l'encollage est donc dans ce cas simultanée, ces ingrédients étant associés au sein des recyclats de laine minérale préalablement à leur introduction dans le mélange.

La masse à mouler obtenue par le mélange est ensuite transformée en composite conformé, notamment en briquettes, par moulage et éventuellement compaction et cure thermique. Notamment, la masse à mouler peut être mise dans un moule, vibrée pour éliminer l'air emprisonné, puis éventuellement compactée en appliquant une pression sur l'une des faces mobiles du moule et éventuellement chauffée avant démoulage.

Dans l'étape de conformation dudit mélange en un composite conformé, une pression de 0,01 à 200 MPa, par exemple de 0,1 à 100 MPa, voire de 0,5 à 50 MPa, de préférence de 1 à 20 MPa, de préférence 5 à 17 MPa peut être appliquée. Dans certains cas, notamment pour des teneurs en recyclats de laine minérale élevées (par exemple, supérieures à 70% en poids), il peut être avantageux d'appliquer deux pressions successives, chacune d'entre elles étant indépendamment de 0,01 à 200 MPa (par exemple de 0,1 à 100 MPa, voire de 0,5 à 50 MPa, de préférence de 1 à 20 MPa, de préférence 5 à 17 MPa), et la deuxième pression appliquée étant typiquement inférieure à la première pression appliquée. Ladite deuxième pression appliquée est généralement de 0,01 à 0,1 MPa, voire de 0,01 à 0,05 MPa. Le temps total pendant lequel la (ou les) pression est appliquée est généralement de 1 minute à 80 heures, de préférence de 30 minutes à 17 heures.

Le composite conformé durcit naturellement. Il peut sécher avec le temps, de sorte que sa teneur en eau peut être fortement réduite avec le temps de stockage. Un temps de séchage adapté contribue également au bon maintien de la forme du composite conformé après son démoulage. Sa teneur en eau peut varier selon ses conditions de stockage.

Le composite conformé peut par exemple avoir un volume supérieur à 1 cm³, par exemple supérieur à 20 cm³, notamment de 100 à 1000 cm³.

Le composite conformé est avantageusement adapté pour être fondu et fibré (notamment par centrifugation interne ou externe, de préférence externe) pour l'obtention d'une laine minérale.

La présente invention concerne également un composite conformé formé à partir d'un mélange tel que décrit ci-dessus, c'est-à-dire comprenant :
- des recyclats de laine minérale,
- un porteur de silice non-cimentaire,
- un porteur de potassium non-cimentaire, typiquement distinct de ladite laine minérale et
- de l'eau,
où le rapport massique SiO₂/K₂O dans le mélange est de 0,05 à 25, de préférence de 0,1 à 25. Plus particulièrement, la présente invention concerne un composite conformé pouvant être obtenu par le procédé tel que défini dans la présente demande.

Le composite conformé selon l'invention est avantageusement adapté pour être fondu et fibré (notamment par centrifugation interne ou externe, de préférence externe) pour l'obtention d'une laine minérale.

Le rapport massique SiO₂/K₂O dans le composite conformé de l'invention est identique à celui du mélange de l'étape i) du procédé de l'invention. Ainsi, le rapport massique SiO₂/K₂O dans le composite conformé de l'invention est de 0,05 à 25. Il s'agit du rapport de la quantité totale massique de silicium, exprimé sous forme d'oxyde (SiO₂), à la quantité totale massique de potassium, exprimé sous forme d'oxyde (K₂O), dans le composite conformé. Plus particulièrement, ce rapport massique SiO₂/K₂O peut être de 0,1 à 25, par exemple de 0,1 à 17, plus particulièrement de 0,2 à 17, de préférence de 0,4 à 15, mieux encore de 0,6 à 12, voire de 0,8 à 10, ou même de 0,8 à 4.

La teneur pondérale totale en K₂O et Na₂O (i.e. teneur pondérale en potassium et sodium, exprimés sous forme d'oxyde) dans le composite conformé est avantageusement inférieure à 15%, de préférence inférieure à 8%, par rapport au poids total sec du composite conformé. Le rapport massique SiO₂/(K₂O+NaO) dans le composite conformé est avantageusement de 0,05 à 15, de préférence de 0,1 à 12, mieux encore de 0,5 à 10, voire de 1 à 3. Il s'agit du rapport de la quantité totale massique de silicium, exprimé sous forme d'oxyde (SiO₂), à la quantité totale massique de potassium et sodium, exprimé sous forme d'oxyde (Na₂O), dans le composite conformé.

Les teneurs massiques en éléments (SiO₂, K₂O, Na₂O,...), et rapports massiques associés, dans le mélange de l'étape i) ou dans le composite conformé peuvent être déterminées par spectrométrie de fluorescence des rayons X.

La résistance en compression du composite conformé de l'invention est avantageusement supérieure ou égale à 5 MPa, de préférence supérieure ou égale à 6 MPa, voire supérieure ou égale à 7 MPa. La résistance en compression est mesurée à l'aide d'une presse suivant la norme NF EN 12390-3.

Un autre objet de la présente invention est un procédé de fabrication d'un verre, comprenant :
- une étape a) d'alimentation d'une enceinte de fusion, tel qu'un four cubilot, avec un composite conformé tel que défini dans la présente demande, en tant que charge vitrifiable, et
- une étape b) de fusion dudit composite conformé dans ladite enceinte de fusion (par exemple dans un four cubilot).

Un autre objet de la présente invention est un procédé de fabrication d'une laine minérale, comprenant :
- une étape a) d'alimentation d'une enceinte de fusion, tel qu'un four cubilot, avec un composite conformé tel que défini dans la présente demande, en tant que charge vitrifiable, et
- une étape b) de fusion dudit composite conformé dans ladite enceinte de fusion, pour obtenir un bain de matière fondue, et
- une étape c) de fibrage dudit bain de matière fondue.

Dans un mode particulier, le bain de matière fondue est immédiatement fibré, pour l'obtention d'une laine minérale. Dans un autre mode particulier, le bain de matière fondue est refroidi et transformé en calcin, qui est ultérieurement (de manière subséquente) de nouveau fondu pour être fibré pour l'obtention d'une laine minérale.

L'étape de fibrage du mélange de matière fondue peut être mise en œuvre par centrifugation interne ou externe, de préférence par centrifugation externe.

On peut par exemple se référer, pour la centrifugation externe, aux demandes de brevet EP195725, EP 0465310 ou EP 0439385, incorporées par référence. On peut par exemple se référer, pour la centrifugation interne, aux demandes de brevet EP 0189354 ou EP 0519797, incorporées par référence.

Il est bien entendu que les différents aspects, modes de réalisation particuliers et préférés décrits ci-dessus pour le procédé de fabrication du composite conformé s'appliquent également au composite conformé selon l'invention ainsi qu'au procédé de fabrication de laine minérale qui utilise un tel composite conformé.

Les exemples ci-après illustrent l'invention de manière non-limitative.

### EXEMPLES

Dans les exemples décrits ci-après, les matières premières suivantes ont été utilisées : Laitier de haut fourneau, métakaolin , carbonate de potassium (K₂CO₃), hydroxyde de calcium (Ca(OH)₂), hydroxyde de potassium (KOH), hydroxyde de sodium (NaOH), carbonate de sodium (Na₂CO₃), déchets de laine minérale et eau.

### Fabrication des composites conformés

1- Pour les mélanges comprenant du KOH (ou du NaOH pour les mélanges comparatifs 2 et 4), une première étape de dissolution du KOH (ou NaOH) dans l'eau a été mise en œuvre. Le poids sec de réactif utilisé dans chaque mélange est indiqué dans le tableau 1 et le volume d'eau utilisée pour le dissoudre est indiqué dans le tableau 2 (« eau KOH/NaOH »).

2 - Les réactifs en poudre (hors NaOH et KOH) ont été mélangés manuellement. Puis, ont été ajoutés dans cet ordre : la solution de KOH (ou NaOH), de l'eau afin de former un liant (« Eau liant »), puis le déchet de laine minérale. Une homogénéisation du mélange a alors été réalisée à l'aide d'un malaxeur.

L'ensemble des poids des réactifs secs est indiqué dans le tableau 1 et le volume d'eau utilisé pour le liant (« Eau liant ») est indiqué dans le tableau 2.

3 - Le mélange de réactifs et de déchets a été introduit dans un moule de diamètre 1,5 cm. Une pression a été appliquée pendant 1 min, à l'aide d'un piston, sur le composite (valeur de la pression appliquée indiquée dans le tableau 3). Le composite a ensuite été laissé dans le moule pendant un temps t à une température T (t et T indiqués dans le tableau 3). Le composite a ensuite été démoulé et stocké à température ambiante, au sec et à l'ombre. Des composites de 3 cm de hauteur et 1,5 cm de diamètre ont été formés. Dans le cas où la pression appliquée sur le composite, à l'aide d'un piston, a été supérieure à 0,5 MPa (tableau 3), ce même piston a été laissé reposer sur le composite jusqu'au démoulage, permettant ainsi d'exercer une force sur le composite de 0,02 MPa.

### Test de résistance mécanique

La résistance en compression du composite conformé a été mesurée 6 jours après avoir réalisé le liant, en suivant la norme NF EN 12390-3. Les résultats des mesures de résistance en compression pour les différents composites conformés sont répertoriés dans le tableau 4.

**[Tableau 1]**

| N° | Déchet de laine^{a} (g) | Cendres volantes^{b} (g) | Laitier^{c} (g) | K₂CO₃ (g) | Na₂CO₃ (g) | Ca(OH)₂ (g) | NaOH (g) | KOH (g) | Rapport massique SiO₂/K₂O |
|---|---|---|---|---|---|---|---|---|---|
| 1 | 20 | 0 | 53,7 | 12,7 | 0 | 9,4 | 0 | 4,2 | 2,1 |
| 2 (Comp.) | 20 | 0 | 53,7 | 0 | 12,7 | 9,4 | 4,2 | 0 | -^{d} |
| 3 | 56,4 | 0 | 22,3 | 8,8 | 0 | 4,4 | 0 | 8,1 | 2,3 |
| 4 (Comp.) | 56,4 | 0 | 22,3 | 0 | 8,8 | 4,4 | 8,1 | 0 | -^{e} |
| 5 | 79,8 | 0 | 11,1 | 0 | 0 | 3,7 | 0 | 5,4 | 7,1 |
| 6 (Comp.) | 79,8 | 0 | 11,1 | 0 | 0 | 3,7 | 5,4 | 0 | -^{f} |
| 7 | 70,5 | 10 | 10 | 2,5 | 0 | 4,5 | 0 | 2,5 | 7,4 |
| 8 (Comp.) | 70,5 | 10 | 10 | 0 | 2,5 | 4,5 | 2,5 | 0 | -^{g} |
| 9 (Comp.) | 10 | 0 | 0,1 | 76,3 | 0 | 9,4 | 0 | 4,2 | 0,08 |
| 10 (Comp.) | 79,8 | 0 | 16 | 0 | 0 | 3.7 | 0 | 0,5 | 33,6 |

| | | | | | | | | | |
|---|---|---|---|---|---|---|---|---|---|
| a : Déchets d'une laine de roche dont la composition chimique comprend en masse : 42% SiO₂, 16,5% Al₂O₃, 31,5% CaO+MgO, 5,5% Fe₂O₃, 2,5% Na₂O+K₂O. b : Cendres volantes dont la composition chimique comprend en masse : 19,2% SiO₂, 6,9% Al₂O₃, 2,9% CaO+MgO, 1,9% Fe₂O₃, 16,3% Na₂O+K₂O. c : Laitier dont la composition chimique comprend en masse : 32,5% SiO₂, 13% Al₂O₃, 35,5% CaO+MgO, 15,9% Na₂O+K₂O. d : Rapport massique SiO₂/Na₂O = 1,4 ; e : Rapport massique SiO_{2/}Na₂O = 2,1 ; f : Rapport massique SiO₂/Na₂O = 5,9 ; g : Rapport massique SiO₂/Na₂O = 4,7 Comp. = comparatif | | | | | | | | | |

**[Tableau 2]**

| N° formulation | Eau KOH/NaOH (mL) | Eau liant (mL) |
|---|---|---|
| 1 | 18,7 | 13,9 |
| 2 (Comp.) | 18,7 | 13,9 |
| 3 | 36 | 0 |
| 4 (Comp.) | 36 | 0 |
| 5 | 24,3 | 2,6 |
| 6 (Comp.) | 24,3 | 2,6 |
| 7 | 12,3 | 27,6 |
| 8 (Comp.) | 12,3 | 27,6 |
| 9 (Comp.) | 18,7 | 13,9 |
| 10 (Comp.) | 24,3 | 2,6 |

**[Tableau 3]**

| N° formulation | Pression appliquée (MPa) | Temps de séchage dans le moule (h) | Température de séchage dans le moule (°C) |
|---|---|---|---|
| 1 | 0,5 | 88 | 20 |
| 2 (Comp.) | 0,5 | 88 | 20 |
| 3 | 13,9 | 16 | 65 |
| 4 (Comp.) | 13,9 | 16 | 65 |
| 5 | 16,7 | 16 | 65 |
| 6 (Comp.) | 16,7 | 16 | 65 |
| 7 | 13,9 | 16 | 65 |
| 8 (Comp.) | 13,9 | 16 | 65 |
| 9 (Comp.) | 0,5 | 88 | 20 |
| 10 (Comp.) | 16,7 | 16 | 65 |

**[Tableau 4]**

| N° formulation | Résistance en compression à 6j (MPa) |
|---|---|
| 1 | 20,8 |
| 2 (Comp.) | 14,6 |
| 3 | 20,8 |
| 4 (Comp.) | 17,8 |
| 5 | 13 |
| 6 (Comp.) | 10,1 |
| 7 | 29,8 |
| 8 (Comp.) | 15,3 |
| 9 (Comp.) | 0,1 |
| 10 (Comp.) | 1,5 |

Le tableau 4 montre, à travers les formulations 1 à 8, que l'utilisation d'un porteur de potassium à la place d'un porteur de sodium permet, pour différents taux de déchets de laine minérale, une augmentation de la résistance mécanique des composites conformés : +43% par comparaison des formulations 1 et 2, et +17% par comparaison des formulations 3 et 4, et +28,7% par comparaison des formulations 5 et 6 et +94,8% par comparaison des formulations 7 et 8.

Le tableau 4 met également en évidence que des rapports massiques SiO₂/K₂O trop faibles ou trop élevés ne permettent pas d'obtenir de bonnes propriétés mécaniques : en effet, une dégradation de la résistance mécanique de 99,5% est observée en comparant les formulations 1 et 9 et de 88,5% par comparaison des formulations 6 et 10.

## Revendications

1. Procédé de fabrication d'un composite conformé adapté pour être fondu et fibré pour l'obtention d'une laine minérale, comprenant :
i) la préparation d'un mélange comprenant :
- des recyclats de laine minérale,
- un porteur de silice non-cimentaire,
- un porteur de potassium non-cimentaire, qui est distinct de ladite laine minérale, et
- de l'eau,
où le rapport massique SiO₂/K₂O dans le mélange est de 0,1 à 25, et
ii) la conformation dudit mélange en un composite conformé.

2. Procédé selon la revendication 1, **caractérisé en ce que** la teneur pondérale en recyclats de laine minérale est :
- d'au moins 10%, par exemple d'au moins 30%, et
- de préférence au plus 90%, par rapport au poids total sec du mélange.

3. Procédé selon la revendication 1 ou 2, **caractérisé en ce que** la teneur pondérale en recyclats de laine minérale est supérieure à 60% et de préférence au plus 90%, par rapport au poids total sec du mélange.

4. Procédé selon l'une quelconque des revendications 1 à 3, **caractérisé en ce que** le rapport massique SiO₂/K₂O dans le mélange est de 0,1 à 17, plus particulièrement de 0,2 à 17, de préférence de 0,4 à 15, mieux encore de 0,6 à 12, voire de 0,8 à 10.

5. Procédé selon l'une quelconque des revendications 1 à 4, **caractérisé en ce que** la teneur pondérale en porteur de silice non-cimentaire est de 4 à 61%, de préférence de 5 à 50%, voire de 5 à 22%, par rapport au poids total sec du mélange.

6. Procédé selon l'une quelconque des revendications 1 à 5, **caractérisé en ce que** ledit porteur de silice non-cimentaire est choisi parmi un silicate alcalin, argile calcinée ou naturelle, kaolinite, illite, montmorillonite, kaolin traité thermiquement, fumée de silice, cendres volantes de classe C ou F, cendres de biomasse, laitier de haut-fourneau, laitier d'aciérie, cendre de cosse de riz, balle de riz, pouzzolane, cendre volcanique, diatomite, et un mélange d'au moins deux de ceux-ci.

7. Procédé selon l'une quelconque des revendications 1 à 6, **caractérisé en ce que** la teneur pondérale en porteur de potassium non-cimentaire est de 1 à 30%, de préférence de 2 à 22%, voire de 2 à 12%, par rapport au poids total sec du mélange.

8. Procédé selon l'une quelconque des revendications 1 à 7, **caractérisé en ce que** le porteur de potassium non-cimentaire est choisi parmi le carbonate de potassium, l'hydroxyde de potassium, l'hydrogénocarbonate de potassium, le sulfate de potassium, et un mélange d'au moins deux de ceux-ci.

9. Procédé selon l'une quelconque des revendications 1 à 8, **caractérisé en ce que** le mélange comprend en outre un porteur d'alcalino-terreux non-cimentaire.

10. Procédé selon la revendication 9, **caractérisé en ce que** la teneur pondérale en porteur d'alcalino-terreux non-cimentaire est de 0 à 22%, de préférence de 1 à 15%, voire de 1 à 7%, par rapport au poids total sec du mélange.

11. Procédé selon la revendication 9 ou 10, **caractérisé en ce que** le porteur d'alcalino-terreux non-cimentaire est choisi parmi un calcaire, la craie (CaCO₃), la chaux vive CaO, la chaux éteinte Ca(OH)₂, la chaux magnésienne, la dolomie CaMg(CO₃)₂, l'aragonite, la vatérite ou autres polymorphes de CaCO₃, ou un mélange d'au moins deux de ceux-ci.

12. Procédé selon l'une quelconque des revendications 1 à 11, **caractérisé en ce que** la teneur pondérale totale en K₂O et Na₂O dans le mélange est inférieure à 15%, de préférence inférieure à 8%, par rapport au poids total sec du mélange.

13. Procédé selon l'une quelconque des revendications 1 à 12, **caractérisé en ce que** les recyclats de laine minérale sont des recyclats de laine minérale comprenant un encollage à base de résine phénolique.

14. Composite conformé adapté pour être fondu et fibré pour l'obtention d'une laine minérale, ledit composite conformé pouvant être obtenu par le procédé tel que défini dans l'une quelconque des revendications 1 à 13.

15. Procédé de fabrication d'un verre, comprenant :
- une étape a) d'alimentation d'une enceinte de fusion, tel qu'un four cubilot, avec un composite conformé tel que défini dans la revendication 14, en tant que charge vitrifiable, et
- une étape b) de fusion dudit composite conformé dans ladite enceinte de fusion.

16. Procédé de fabrication d'une laine minérale, comprenant :
- une étape a) d'alimentation d'une enceinte de fusion, tel qu'un four cubilot, avec un composite conformé tel que défini dans la revendication 14, en tant que charge vitrifiable, et
- une étape b) de fusion dudit composite conformé dans ladite enceinte de fusion, pour obtenir un bain de matière fondue, et
- une étape c) de fibrage dudit bain de matière fondue.
